# FASCICULE DE BREVET EUROPEEN

(11) **EP 3 265 716 B1**
(45) Date de publication et mention de la délivrance du brevet: **26.12.2018**
(21) Numéro de dépôt: 16714979.8
(22) Date de dépôt: 24.02.2016
(51) Int. Cl.: F17C 13/04

(54) **ROBINET, RÉCIPIENT ET PROCÉDÉ DE REMPLISSAGE, DE SOUTIRAGE ET DE MISE SOUS VIDE**
VENTIL, BEHÄLTER UND VERFAHREN ZUM FÜLLEN, EXTRAHIEREN UND ABFÜHREN
VALVE, RECEPTACLE AND METHOD FOR FILLING, EXTRACTING AND EVACUATING

(30) Priorité: 04.03.2015 FR 1551811
(43) Date de publication de la demande: 10.01.2018
(73) Titulaire: L'Air Liquide Société Anonyme pour l'Etude et l'Exploitation des Procédés Georges Claude, 75007 Paris (FR)
(72) Inventeur: FRENAL, Antoine, 95460 Ezanville (FR)
(74) Mandataire: De Cuenca, Emmanuel Jaime
(86) Numéro de dépôt international: PCT/FR2016/050426
(87) Numéro de publication internationale: WO 2016/139404

(56) Documents cités:
- EP-A1- 2 591 274
- EP-A1- 2 699 837
- FR-A1- 2 955 170
- FR-A1- 2 958 006
- FR-A1- 2 962 519
- FR-A1- 2 996 278
- GB-A- 1 152 890
- US-A- 3 930 517
- US-A1- 2012 160 335

## Description

La présente invention concerne un robinet, un récipient de fluide sous pression ainsi que des procédés de remplissage, de soutirage et de mise sous vide correspondants.

L'invention concerne plus particulièrement un robinet comprenant un corps délimitant un circuit interne de remplissage et de soutirage de fluide, ledit circuit interne s'étendant entre une extrémité amont destinée à être reliée avec un organe utilisateur soutirant ou distribuant du fluide sous pression via le circuit interne et une extrémité aval destinée à être mise en relation avec le volume de stockage d'un réservoir de fluide sous pression, le robinet comprenant, disposés en série dans le circuit interne : un clapet d'isolement et un clapet pare-poussière, le clapet d'isolement étant mobile relativement à un siège entre une position amont de fermeture du circuit et au moins une position aval d'ouverture du circuit, ledit clapet d'isolement étant sollicité vers sa position amont par un organe de rappel, le clapet pare-poussière comprenant une extrémité aval et étant disposé en amont du clapet d'isolement et étant mobile relativement au corps entre une position amont de fermeture de l'extrémité amont du circuit et au moins une position aval d'ouverture de l'extrémité amont du circuit, ledit clapet pare-poussière étant sollicité vers sa position amont par un organe de rappel.

L'invention concerne en particulier un robinet comprenant un raccord de remplissage et de soutirage comprenant en série, d'amont en aval (dans le sens d'un remplissage de gaz), un clapet pare-poussière et un clapet d'isolement.

Le document EP2699837A1 décrit un robinet de gaz sous pression comprenant un clapet d'isolement et un clapet de pression résiduelle disposés en série. Le clapet d'isolement peut intégrer une fonction anti-retour. Cette structure est cependant inadaptée à des remplissages et soutirages partiellement automatisées. En effet, l'actionnement des différents clapets doit être réalisé manuellement, indépendamment des opérations de raccordement sur le port de remplissage.

Le document EP2591274A1 décrit un raccord de remplissage comprenant, disposés en série, un clapet pare-poussière et un clapet d'isolation intégrant une fonction anti-retour.

Ce type de clapet de remplissage n'est pas parfaitement adapté au soutirage de gaz.

Les dispositifs connus sont donc soit adaptés au remplissage de réservoirs de gaz sous pression pour empêcher un remplissage non autorisé, soit adaptés au soutirage de gaz sous pression pour empêcher que du gaz extérieur ne puisse polluer le volume intérieur du réservoir.

Les dispositifs connus ne permettent pas à la fois de simplifier et d'automatiser les processus de remplissage et de soutirage de réservoirs de gaz via un même port ou raccord tout en garantissant la sécurité, la fiabilité et l'ergonomie pour les utilisateurs.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que le robinet comprend en outre, dans le circuit interne, un clapet de pression résiduelle distinct du clapet d'isolation, le clapet de pression résiduelle étant disposé en série avec le clapet d'isolation et en aval du clapet d'isolation.

A noter que les termes « amont » et « aval » désignent les deux extrémités du circuit (ou du raccord du robinet ou du robinet lui-même) lorsque le fluide circule dans le sens d'un remplissage (de l'extérieur vers l'intérieur du réservoir). C'est-à-dire que, lors d'un remplissage au travers du circuit interne le fluide circule de l'extrémité amont vers l'extrémité aval. Bien entendu, lorsque le fluide est soutiré il circule dans ce cas de l'aval vers l'amont.

Par ailleurs, des modes de réalisation de l'invention peuvent comporter l'une ou plusieurs des caractéristiques suivantes :
- le clapet pare-poussière est déplaçable de sa position amont de fermeture vers: une première position aval déterminée dite « sans contact » ouvrant l'extrémité amont du circuit, dans laquelle l'extrémité aval du clapet pare-poussière ne pousse pas le clapet d'isolement, ou, une seconde position aval déterminée dite « de contact » ouvrant l'extrémité amont du circuit, dans laquelle l'extrémité aval du clapet pare-poussière vient pousser une extrémité amont du clapet d'isolement mobile pour déplacer par contact le clapet d'isolement hors de son siège vers une première position aval d'ouverture du circuit dans laquelle le clapet d'isolement ne pousse pas le clapet de pression résiduelle, ou, une troisième position aval déterminée dite « de remplissage » ouvrant l'extrémité amont du circuit, dans laquelle l'extrémité aval du clapet pare-poussière vient pousser une extrémité amont du clapet d'isolement mobile pour déplacer par contact le clapet d'isolement hors de son siège vers une seconde position aval d'ouverture du circuit dans laquelle le clapet d'isolement pousse le clapet de pression résiduelle dans une position d'ouverture de l'extrémité aval du circuit,
- le clapet d'isolement est déplaçable de sa position amont de fermeture vers l'aval dans: une première position aval déterminée d'ouverture du circuit, dans laquelle le clapet d'isolement ne pousse pas le clapet de pression résiduelle, ou, une seconde position aval déterminée d'ouverture du circuit dans laquelle une extrémité aval du clapet d'isolement pousse une extrémité amont du clapet de pression résiduelle déplaçant le clapet de pression résiduelle dans une position d'ouverture de l'extrémité aval du circuit,
- le clapet de pression résiduelle comprend un mécanisme anti-retour («NRV») générant un effort sur le clapet de pression résiduelle le sollicitant vers sa position de fermeture du circuit lorsque ce dernier n'est pas actionné mécaniquement et est soumis à une pression fluidique déterminée au niveau de sa partie amont,
- le mécanisme anti-retour (« NRV ») comprend un canal reliant un extrémité amont du clapet de pression résiduelle à une chambre aval, pour transformer une pression fluidique sur la partie amont du clapet de pression résiduelle en un effort sur l'extrémité aval du clapet de pression résiduelle tendant à déplacer ledit clapet de pression résiduelle dans sa position de fermeture du circuit,
- le mécanisme anti-retour (« NRV ») comprend un rapport de surfaces déterminé entre d'une part l'extrémité amont du clapet de pression résiduelle soumise à un fluide venant de l'amont dans le circuit et, d'autre part, l'extrémité aval du clapet de pression résiduelle, pour solliciter ledit clapet de pression résiduelle en position de fermeture lorsque ces extrémité aval et amont sont soumises à un différentiel de pression déterminé,
- le robinet comporte un filtre aval disposé dans le circuit interne et interposé en aval du clapet de pression résiduelle et contraignant au moins une partie et de préférence tout le flux de fluide transitant dans le circuit au travers de clapet de pression résiduel ouvert à traverser le filtre,
- le clapet de pression résiduelle est configuré pour refermer le circuit tant que le différentiel de pression entre ses extrémités aval et amont n'excède pas une valeur déterminée, par exemple comprise entre trois et six bar, c'est-à-dire que, à défaut d'être actionné mécaniquement vers sa position d'ouverture, le clapet de pression résiduel n'ouvre le circuit que lorsque la pression de fluide exercée sur sa face aval excède la pression exercée sur sa face amont d'une valeur déterminée,
- le circuit interne de remplissage s'étend selon un axe longitudinal entre les extrémités amont et aval,
- le clapet pare-poussière, le clapet d'isolation et le clapet de pression résiduelle sont disposés en série dans cet ordre de l'amont vers l'aval dans le circuit interne,
- le clapet pare-poussière est déplaçable dans au moins les quatre positions distincte suivantes : sa position amont de fermeture de l'extrémité amont du circuit, la première position aval déterminée dite « sans contact », la seconde position aval déterminée dite « de contact », la troisième position aval déterminée dite « de remplissage »,
- lesdites quatre positions distincte du clapet pare-poussière (position amont de fermeture, la première position aval déterminée dite « sans contact », la seconde position aval déterminée dite « de contact », la troisième position aval déterminée dite « de remplissage ») sont situées à des emplacements déterminés distincts et successifs selon la direction amont/aval dans le circuit,
- le clapet d'isolement est déplaçable dans au moins les trois positions suivantes : sa position amont de fermeture, la première position aval déterminée d'ouverture du circuit, la seconde position aval déterminée d'ouverture du circuit,
- lesdites trois positions distinctes du clapet d'isolement (position amont de fermeture, la première position aval déterminée d'ouverture du circuit, la seconde position aval déterminée d'ouverture du circuit sont situées à des emplacements déterminés distincts et successifs selon la direction amont/aval dans le circuit,
- lorsque le clapet de pression résiduelle n'est pas déplacé mécaniquement dans une position d'ouverture du circuit (via le clapet d'isolement), le mécanisme anti-retour («NRV») empêche le transit de fluide sous pression de l'amont vers l'aval en maintenant fermé le clapet de pression résiduelle via la pression du fluide circulant d'amont vers l'aval sur le clapet de pression résiduelle,
- le clapet pare- poussière porte un filtre interposé sur le trajet d'au moins une partie du fluide qui transite entre l'amont et l'aval du circuit, le filtre étant mobile avec le clapet pare-poussière,
- le clapet pare-poussière comporte un ou des passages pour guider au moins une partie du flux de fluide transitant d'amont en aval à travers le corps dudit clapet pare-poussière,
- le ou les passages sont situés en amont du filtre porté par le clapet pare-poussière et débouchent en amont dudit filtre,
- le corps du robinet a une portion de forme générale cylindrique dont la surface extérieur comprend, de l'amont, vers l'aval, une zone cylindrique d'accrochage comprenant au moins une rainure et/ou au moins une nervure périphérique et au moins l'un parmi : une zone à surfaces à plusieurs pans notamment une zone hexagonale, une zone filetée,
- en position amont de fermeture de l'extrémité amont du circuit le clapet pare-poussière referme le circuit de façon non étanche ou étanche,
- le robinet comprend au moins un joint porté par le clapet pare-poussière et/ou le corps du robinet pour canaliser le gaz circulant dans le circuit via l'extrémité amont ouverte du circuit, par exemple la périphérie du clapet pare-poussière comprend un joint coopérant avec la surface intérieure du circuit,
- le circuit interne assure à la fois le remplissage et le soutirage de gaz, c'est-à-dire que le circuit est bidirectionnel, le fluide circulant d'amont en aval (5) dans le circuit via les clapets en série dans le cas d'un remplissage et circule d'aval vers l'amont dans le circuit via les clapets en série dans le cas d'un soutirage,
- en fin de processus de remplissage d'un récipient de gaz sous pression, le clapet d'isolement est refermé automatiquement par son organe de rappel lorsque l'effort exercé sur la partie amont de ce dernier devient inférieur à un seuil déterminé,
- la surface extérieure du corps comprend des empreintes formant des creux et/ou des reliefs d'attache destines a coopérer avec des formes conjuguées d'une prise de conditionnement pour former un système d'attache mécanique sélectif, notamment a connexion rapide,
- le robinet comprend un conduit ayant une première extrémité reliée au circuit en aval du clapet de pression résiduel et une seconde extrémité reliée à l'un au moins parmi : un organe de mesure de la pression (par exemple un manomètre monté sur le corps) pour indiquer la pression dans le réservoir, une soupape de sécurité comprenant un obturateur sensible à la pression pour évacuer le gaz vers l'extérieur du robinet en cas de pression excessive déterminée.

L'invention concerne également un récipient de fluide sous pression, en particulier bouteille ou ensemble de bouteilles de gaz sous pression, comprenant un robinet conforme à l'une quelconque des caractéristiques ci-dessus ou ci-après.

L'invention concerne également un procédé de remplissage d'un tel récipient de fluide sous pression au moyen d'une prise de conditionnement connectée mécaniquement au corps du robinet de façon amovible, le procédé comportant une étape de déplacement du clapet pare-poussière de l'amont vers l'aval dans une position aval déterminée dite « de remplissage » ouvrant l'extrémité amont du circuit, dans laquelle l'extrémité aval du clapet pare-poussière vient pousser une extrémité amont du clapet d'isolement mobile et déplace par contact le clapet d'isolement hors de son siège vers une position aval d'ouverture du circuit, le clapet de pression résiduelle étant également déplacé dans une position d'ouverture de l'extrémité aval du circuit pour autoriser le transfert de fluide d'amont vers l'aval dans le récipient.

Selon d'autres particularités possibles :
- dans sa position aval déterminée dite « de remplissage » l'extrémité aval du clapet pare-poussière vient pousser une extrémité amont du clapet d'isolement mobile et déplace par contact le clapet d'isolement dans une position déterminée d'ouverture dans laquelle le clapet d'isolement pousse à son tour le clapet de pression résiduelle dans une position d'ouverture de l'extrémité aval du circuit pour autoriser le transfert de fluide d'amont vers l'aval dans le récipient,
- le clapet pare-poussière est déplacé vers l'aval par une action mécanique d'une extrémité d'un pousse-clapet mobile appartenant à la prise de conditionnement.

L'invention concerne également un procédé de soutirage de fluide sous pression d'un tel récipient au moyen d'une prise de conditionnement connectée mécaniquement au corps du robinet de façon amovible, le procédé comportant une première étape de déplacement du clapet pare-poussière de l'amont vers l'aval dans une position aval déterminée dite « de contact » ouvrant l'extrémité amont du circuit, dans laquelle l'extrémité aval du clapet pare-poussière vient pousser une extrémité amont du clapet d'isolement mobile pour déplacer par contact le clapet d'isolement hors de son siège vers une première position aval d'ouverture du circuit dans laquelle le clapet d'isolement ne pousse pas le clapet de pression résiduelle, pour permettre le soutirage de fluide dans le circuit de l'aval vers l'amont au travers du clapet de pression résiduel ouvert par la pression aval dans le récipient.

L'invention concerne également un procédé de mise sous vide du robinet d'un tel récipient au moyen d'une prise de conditionnement connectée mécaniquement et de façon étanche au corps du robinet, le procédé comportant une étape de déplacement du clapet pare-poussière de l'amont vers l'aval dans une position aval déterminée dite « sans contact » ouvrant l'extrémité amont du circuit mais dans laquelle l'extrémité aval du clapet pare-poussière ne vient pas pousser une extrémité amont du clapet d'isolement mobile qui reste en position de fermeture, et une étape de génération d'une pression inférieure à la pression atmosphérique dans la partie amont du circuit de soutirage, c'est-à-dire en amont du clapet d'isolation.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en coupe, schématique et partielle, illustrant la structure d'un robinet monté sur un réservoir selon un exemple de réalisation de l'invention dans une configuration fermée (trois clapets fermés),
- la figure 2 représente le robinet de la figure 1 muni d'un organe d'actionnement et dans un premier état (ouverture du premier clapet),
- la figure 3 représente le robinet de la figure 1 muni d'un organe d'actionnement et dans un deuxième état dit de soutirage (ouverture des trois clapets),
- la figure 4 représente le robinet de la figure 1 muni d'un organe d'actionnement et dans un troisième état dit « de remplissage » (ouverture des trois clapets),
- la figure 5 représente le robinet de la figure 1 muni d'un organe d'actionnement et dans un quatrième état dit « anti-retour » (ouverture des deux premiers clapets et fermeture du troisième clapet),
- la figure 6 représente une vue en coupe longitudinale, schématique et partielle d'un exemple de réalisation structurelle d'un robinet selon l'invention dans une configuration fermée,
- la figure 7 représente une vue similaire à la figure 6 dans laquelle le robinet est raccordé à un outil de conditionnement de gaz et est dans un premier état (ouverture du premier clapet),
- les figures 8 et 9 représentent des vues en coupe longitudinale, schématiques et partielles du robinet de la figure 6 raccordé à un outil de conditionnement de gaz et dans un deuxième état dit « de soutirage »,
- la figure 10 représente une vue en coupe transversale du robinet de la figure 9 selon une ligne AA,
- la figure 11 représente une vue en coupe longitudinale du robinet de la figure 6 dans laquelle le robinet est raccordé à un outil de conditionnement de gaz et est dans un troisième état dit « de remplissage »,
- la figure 12 représente une vue en coupe longitudinale du robinet de la figure 6 dans laquelle le robinet est raccordé à un outil de conditionnement de gaz et est dans un quatrième état dit « anti-retour ».

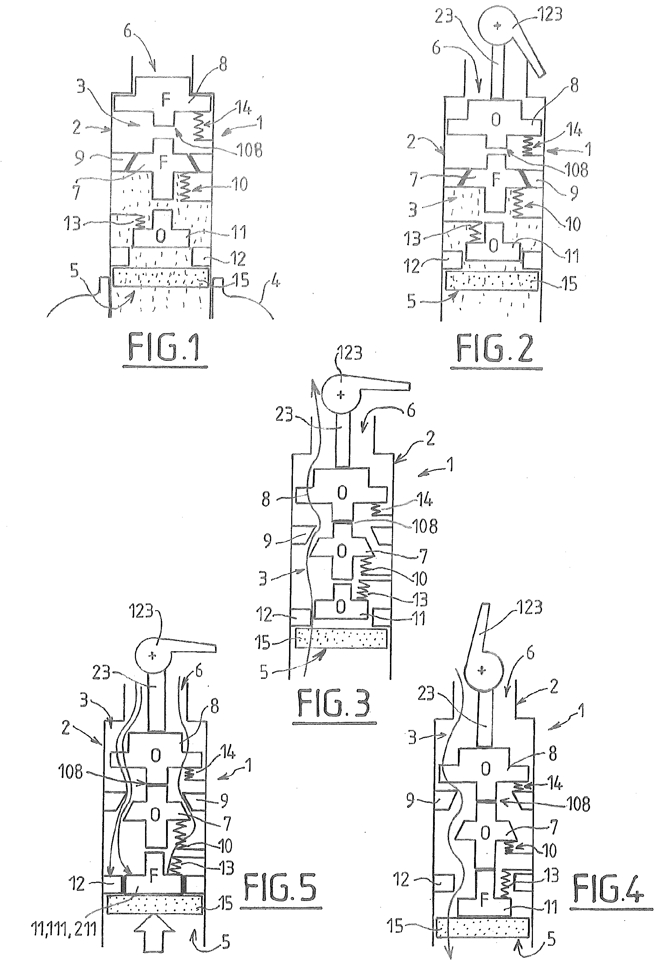

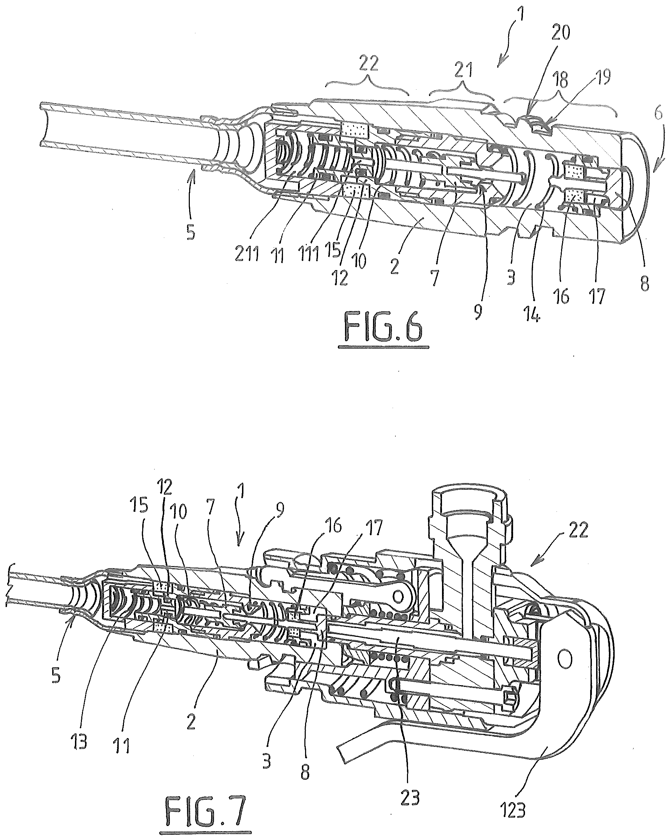

En se référant aux figures 1 et 6, le robinet 1 comprend un corps 2 délimitant un circuit 3 interne de remplissage et de soutirage de fluide.

Le circuit 3 interne s'étend entre une extrémité amont 6 destinée à être reliée avec un organe utilisateur soutirant ou distribuant du fluide sous pression via le circuit 3 interne et une extrémité aval 5 destinée à être mise en relation avec le volume de stockage d'un réservoir 4 de fluide sous pression

De préférence, le circuit 3 interne s'étend selon un axe longitudinal. De même le corps 2 s'étend de préférence selon un axe longitudinal et a une forme générale oblongue, par exemple cylindrique.

Le robinet 1 comprend, disposés en série dans le circuit 3 interne de l'amont 6 vers l'aval, un clapet 8 pare-poussière, un clapet 7 d'isolement et un clapet 11 de pression résiduelle.

Chaque clapet comprend de préférence un obturateur respectif mobile relativement à un siège respectif. De plus, chaque obturateur mobile est sollicité par un organe de rappel respectif tel qu'un ressort vers une position de fermeture du circuit 3 interne.

Ainsi, le clapet 7 d'isolement est mobile en translation relativement à son siège 9 entre une position amont de fermeture du circuit 3 et au moins une position aval d'ouverture du circuit 3. Le clapet 7 d'isolement est sollicité vers sa position amont par un organe 10 de rappel tel qu'un ressort.

Le clapet 8 pare-poussière comprend une extrémité aval 108 et est disposé en amont du clapet 7 d'isolement. Le clapet 8 pare-poussière est mobile relativement au corps 2 entre une position amont de fermeture de l'extrémité amont du circuit 3 et au moins une position aval d'ouverture de l'extrémité amont du circuit 3. Le clapet 8 pare-poussière est sollicité vers sa position amont par un organe 14 de rappel tel qu'un ressort.

Comme représenté aux figures 1 et 6, en situation de repos (pas de sollicitation externe), les trois clapets 8, 7, 11 sont dans leur position de fermeture du circuit 3.

Selon une particularité avantageuse, le clapet 8 pare-poussière est déplaçable de sa position amont de fermeture vers une première position aval déterminée dite « sans contact » ouvrant l'extrémité amont du circuit 3, dans laquelle l'extrémité 108 aval du clapet 8 pare-poussière ne pousse pas le clapet 7 d'isolement (pas de contact avec le clapet 7 d'isolement) cf. figures 2 et 7.

Cette position peut être obtenue par exemple en raccordant à l'extrémité amont du corps 2 du robinet 1 un outil 22 de remplissage et/ou soutirage. Par exemple, l'outil 22 comporte un organe 23 pousse clapet mobile qui vient légèrement déplacer le clapet 8 par poussière de l'amont vers l'aval (cf. figures 2 et 7). Le pousse-clapet 23 peut être déplacé par exemple via un levier 123 pivotant actionnable manuellement, hydrauliquement, pneumatiquement, électriquement ou par tout autre organe d'actionnement approprié.

Cette position sans contact présente de nombreux avantages. Ainsi, cette configuration dans laquelle seul le clapet 8 pare-poussière est ouvert permet de raccorder de façon étanche un outil de remplissage et/ou de soutirage à l'extrémité amont du robinet avec un effort constant quel que soit le niveau de pression en amont du clapet 7 d'isolation. En effet, la pression en amont du clapet 8 pare-poussière peut être la même qu'à l'extérieur du robinet (pression atmosphérique ambiante), en particulier lorsque le clapet 8 pare-poussière ferme de façon non étanche l'extrémité amont 6 du circuit 3.

De plus, cette configuration sans contact permet également à un outil de remplissage/soutirage de réaliser des tests d'étanchéité du clapet 7 d'isolement. L'outil de remplissage/soutirage se raccorde de façon étanche à l'extrémité 6 du robinet et peut être configurée pour réaliser une mise sous vide (dépression) dans la partie amont du circuit 3 (en amont du clapet 7 d'isolation). Ceci permet de réaliser un ou des tests pour vérifier/qualifier le niveau d'étanchéité du clapet 7 et de l'outil, par exemple avant de soumettre le mécanisme à des pressions élevées.

Le clapet 8 pare-poussière est déplaçable plus loin vers l'aval dans une seconde position aval déterminée dite « de contact » ouvrant l'extrémité amont 6 du circuit 3 et dans laquelle l'extrémité 108 aval du clapet 8 pare-poussière vient pousser une extrémité amont du clapet 7 d'isolement. Le clapet 7 d'isolement est alors déplacé par contact hors de son siège 9 vers une première position aval d'ouverture du circuit 3 dans laquelle le clapet 7 d'isolement ne pousse pas le clapet 11 de pression résiduelle (cf. figures 3, 8 et 9).

C'est-à-dire que, dans ce cas, les deux premiers clapets 8, 7 sont ouverts mécaniquement tandis que le troisième clapet 11 de pression résiduelle s'ouvre ou se ferme en fonction des conditions de pression (par actionnement fluidique).

Cette configuration correspond à un état de soutirage de fluide à travers le robinet 1. En effet, si le différentiel de pression entre l'intérieur du réservoir 4 (en aval du clapet 11 de pression résiduel) et l'extérieur (en amont du clapet 11 de pression résiduelle) est suffisant, le clapet 11 de pression résiduel s'ouvre sous l'action de la pression de gaz et le gaz peut s'échapper de l'aval 5 vers l'amont 6 comme schématisé par les flèches aux figures 3, 8 et 9.

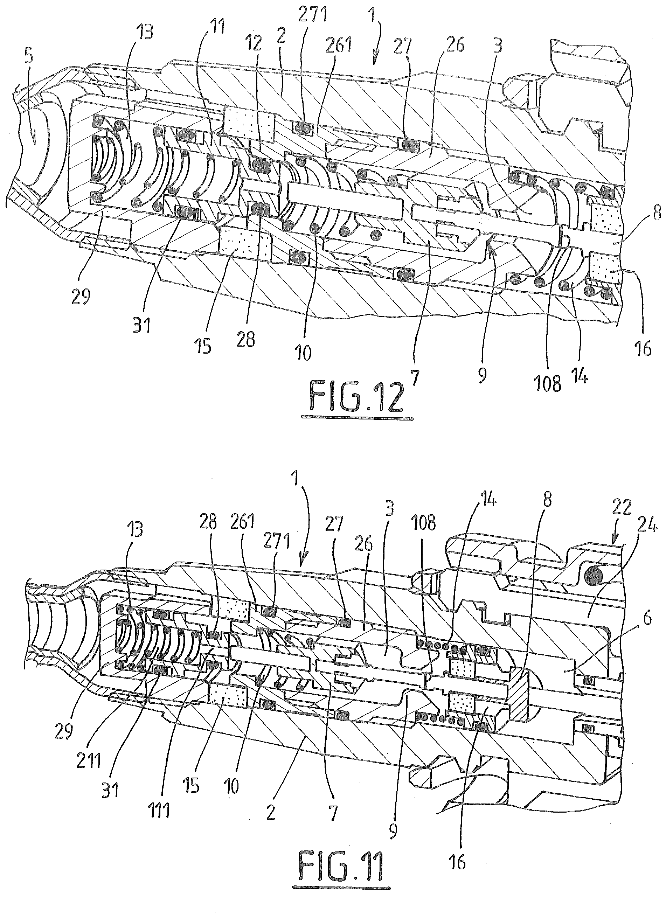

Le clapet 8 pare-poussière est déplaçable encore plus loin vers l'aval dans une troisième position aval déterminée dite « de remplissage » ouvrant l'extrémité amont 6 du circuit 3. Dans cette position l'extrémité 108 aval du clapet 8 pare-poussière vient pousser une extrémité amont du clapet 7 d'isolement mobile pour déplacer par contact le clapet 7 d'isolement hors de son siège 9 vers une seconde position aval d'ouverture du circuit 3. Dans cette position le clapet 7 d'isolement pousse le clapet 11 de pression résiduelle dans une position d'ouverture de l'extrémité aval du circuit 3. C'est-à-dire que, dans ce cas, les trois clapets 8, 7, 11 sont ouverts mécaniquement (c'est-à-dire par actionnement mécanique en chaine) cf. figures 4 et 11.

En particulier, le clapet 11 de pression résiduelle est ainsi ouvert mécaniquement quel que soit le différentiel de pression de fluide auquel il est soumis.

Cette configuration correspond à un état de remplissage d'un réservoir 4 à travers le robinet 1, la figure 4 schématise par des flèches le trajet de gaz de l'amont 6 vers l'aval 5.

Ainsi, le clapet 7 d'isolement est déplaçable de sa position amont de fermeture vers l'aval dans:
- une première position aval déterminée d'ouverture du circuit 3, dans laquelle le clapet 7 d'isolement ne pousse pas le clapet 11 de pression résiduelle, ou
- une seconde position aval déterminée d'ouverture du circuit 3 dans laquelle une extrémité aval du clapet 7 d'isolement pousse une extrémité amont du clapet 11 de pression résiduelle déplaçant le clapet 11 de pression résiduelle dans une position d'ouverture forcée de l'extrémité aval du circuit 3.

De préférence, le clapet 11 de pression résiduelle comprend un mécanisme 111, 211 anti-retour («NRV») générant un effort sur le clapet 11 de pression résiduelle le sollicitant vers sa position de fermeture du circuit 3 lorsque ce dernier n'est pas actionné mécaniquement et est soumis à une pression fluidique déterminée au niveau de sa partie amont.

C'est-à-dire que, dans la configuration de la figure 3, si un utilisateur tente de remplir le réservoir (en injectant du gaz sous pression de l'amont 6 vers l'aval), le mécanisme anti-retour va provoquer la fermeture du clapet 11 de pression résiduelle comme illustré à la figure 5. En particulier, la pression du gaz de l'amont 6 vers l'aval 5 va générer sur le clapet 11 de pression résiduelle un effet dans le sens de la fermeture de ce dernier (symbolisé par une flèche de bas en haut sur l'extrémité aval du clapet 11 de pression résiduelle).

Comme illustré aux figures 6 et suivantes et en particulier à la figure 12, le mécanisme 111, 211 anti-retour (« NRV ») peut comprendre un canal 111 reliant une extrémité amont du clapet 11 de pression résiduelle à une chambre 211 aval étanche, pour transformer une pression fluidique sur la partie amont du clapet 11 de pression résiduelle en un effort sur l'extrémité aval du clapet 11 de pression résiduelle tendant à déplacer ledit clapet 11 de pression résiduelle dans sa position de fermeture du circuit 3. Le mécanisme 111, 211 anti-retour (« NRV ») peut comprendre en particulier un rapport de surfaces déterminé entre d'une part l'extrémité amont du clapet 11 de pression résiduelle soumise à un fluide venant de l'amont dans le circuit 3 (venant de l'extérieur) et, d'autre part, l'extrémité aval du clapet 11 de pression résiduelle. Ceci sollicite le clapet 11 de pression résiduelle en position de fermeture lorsque son extrémité amont est soumise à du fluide sous pression à avec une pression supérieure à la pression exercée sur son extrémité aval.

Cette architecture avec mécanisme 111, 211 anti-retour (« NRV) permet de réaliser des cycles de rinçage du circuit 3 jusqu'en amont du clapet 11 de pression résiduelle pour réaliser par exemple des mélanges dans la bouteille. C'est-à-dire qu'on réalise successivement des montées en pression et des détentes (purges) dans le circuit 3. Le clapet 8 pare-poussière étant ouvert, lors des mises sous pression, le clapet 7 d'isolement est ouvert (pneumatiquement ou mécaniquement) et le clapet 11 de pression résiduel avec le mécanisme NRV reste fermé (car il n'est pas actionné mécaniquement). Le clapet 8 pare-poussière étant ouvert, lors des phases de purge (détente), si le clapet 7 d'isolement est ouvert mécaniquement, le clapet 11 de pression résiduel avec le mécanisme NRV reste fermé et le circuit est purgé jusqu'en amont du clapet 11 de pression résiduelle. Si en cas de purge le clapet 7 d'isolement est fermé (pas actionné mécaniquement), la purge n'est réalisée qu'en amont du clapet 7 d'isolement. Ces phases de purges permettent de d'évacuer et de contrôler la nature du gaz dans les parties concernées du circuit sans polluer le volume aval du circuit qui en communication avec la bouteille 5. Les gammes de pression utilisées lors des phases de mise en pression peuvent être comprises par exemple entre 10 et 100bar tandis que les gammes de pression de purge peuvent être comprises par exemple entre 3bar au dessus de la pression atmosphérique et un bar en dessous de la pression atmosphérique.

Dans l'exemple non limitatif décrit, lorsque du gaz sous pression vient de l'amont, ce gaz pénètre dans la chambre 211 aval étanche par le canal 111 et produit par la résultante des efforts une poussée du claper 11 vers son siège (vers l'amont) cf. figures 5 et 12.

Par exemple, le clapet 11 de pression résiduelle est configuré pour refermer le circuit 3 tant que le différentiel de pression entre ses extrémités aval et amont n'excède pas une valeur déterminée, par exemple comprise entre trois et six bar, c'est-à-dire que, à défaut d'être actionné mécaniquement vers sa position d'ouverture, le clapet 11 de pression résiduel n'ouvre le circuit que lorsque la pression de fluide exercée sur sa face aval excède la pression exercée sur sa face amont d'une valeur déterminée. De plus, plus la pression provenant de l'amont est importante, plus l'effort de fermeture du clapet 11 est important.

Les figures 6 à 12 illustrent plus en détail un exemple de réalisation possible et non limitatif d'un robinet conforme aux figures 1 à 5.

Le robinet 1 possède un corps 2 a forme essentiellement ou majoritairement cylindrique et comprenant quatre zones distinctes successives.

Ainsi, une première zone du corps 2 (côté amont 6) comprend une portion 18 cylindrique définissant sur la surface extérieure du corps 2 une ou plusieurs rainures 19 et/ou une ou plusieurs nervures 20. Cette portion 18 est prévu forme une empreinte déterminée pour coopérer en accrochage mécanique avec un organe 24 d'accrochage conjugué déterminée (griffe(s) et/ou système à billes ou autre...) d'un organe 22 de conditionnement (cf. par exemple figure 7). Cette portion 18 permet ainsi détrompage ou décodage entre le robinet 2 (et donc le gaz du réservoir auquel il est lié) gaz et le module 22 de soutirage ou remplissage correspondant.

En aval de cette portion 18, le corps 2 comprend de préférence une zone prévue pour coopérer avec un outil de montage (par exemple une clé) sur un réservoir. Cette interface a de préférence plusieurs pans et est par exemple hexagonale pour la coopération avec un outil de serrage et capable de résister au couple de serrage nécessaire au bon maintien corps sur un réservoir.

En aval, le corps 2 comprend une zone 22 filetée pour le raccordement du robinet 1 dans le taraudage d'une bouteille de gaz par exemple.

Le corps 2 comprend un alésage longitudinal central interne formant le circuit 3 interne. Le clapet 8 pare poussière situé au niveau de l'extrémité amont 6 du circuit 3 est de préférence un clapet non étanche. C'est-à-dire que, en en position de fermeture il ferme l'extrémité amont de façon non étanche. De préférence également, le clapet 8 pare-poussière affleure (est situé dans le même plan que l'extrémité amont 6 du corps 2) en position de fermeture. De cette façon, le risque de collecter de l'eau, des poussières ou salissures est évité ou au moins réduit grâce au clapet 8 pare-poussière.

Comme illustré, le clapet 8 pare- poussière peut porter un filtre 16 interposé sur le trajet d'au moins une partie du fluide qui transite entre l'amont et l'aval du circuit 3. Le filtre 16, qui protège les clapets 7, 11, en aval est de préférence mobile avec le clapet 8 pare-poussière.

Comme illustré également le clapet 8 pare-poussière peut comporter un ou des passages 17 internes pour guider au moins une partie du flux de fluide transitant d'amont 3 en aval 4 à travers le corps dudit clapet 8 pare-poussière. Le ou les passages 17 sont situés de préférence en amont du filtre 16 porté par le clapet 8 pare-poussière et débouchent en amont dudit filtre 16. De plus, pour faire converger le flux de gaz au travers du filtre 16, la périphérie du clapet 8 pare-poussière peut comporter un joint (par exemple torique) coopérant avec la paroi interne du circuit 3 interne pour contraindre le flux de gaz à converger dans les passages 17 et le filtre 16.

Le clapet 8 d'isolement peut comprendre une tige centrale faisant saille vers l'aval (formant une extrémité aval 108) et permettant la coopération avec le clapet 7 d'isolement adjacent. Par exemple, cette tige centrale peut obturer un jeu fonctionnel (pour le montage de la tige dans le filtre 16) grâce à une forme conique venant légèrement déformer un perçage central du filtre 16).

Le filtre 16 peut être serti dans le clapet 8 pare-poussière via une zone externe déformable du clapet 8. Ceci permet d'assurer le maintien du filtre 16 dans le pare poussière 8 et d'obturer le jeu fonctionnel (pour le montage du filtre 16 dans le pare poussière 8).

En aval, le clapet 7 d'isolement et son organe 10 de rappel peuvent être formé dans une cartouche 26, 261 tubulaire vissée dans le corps 2. Cette cartouche peut être formée de deux pièces 26, 261 vissées l'une à l'autre et intégrant respectivement chacun un joint torique 27, 271 sur son pourtour externe pour assurer l'étanchéité interne. Cette cartouche 26, 261 guide l'organe de rappel (ressort 10) du clapet 7 d'isolement.

Comme illustré, l'extrémité aval de cette cartouche 261 peut accueillir et guider un filtre 15 annulaire de soutirage disposé en aval du clapet 7 d'isolation.

Cette extrémité aval de la cartouche 261 peut également coopérer avec le clapet 11 de pression résiduelle en formant un siège pour ce dernier.

En particulier, l'extrémité aval de cette cartouche 261 forme un logement accueillant et comprimant un joint 28 (par exemple torique) d'une une extrémité amont du clapet 11 de pression résiduelle.

Le clapet 11 de pression résiduelle peut comprendre un obturateur mobile dans une pièce 29 en forme de capuchon.

L'obturateur du clapet 11 de pression résiduelle peut comporter un autre joint 31 périphérique en aval coopérant avec l'intérieur de la pièce 29 en forme de bouchon. Les diamètres des deux joints 28, 31 du clapet 11 de pression résiduelle sont différents pour générer un différentiel de section d'appui pour le gaz.

Au moins un ressort 13 logé dans la pièce 29 en forme de capuchon génère un effort de fermeture sur l'obturateur 11 vers l'amont pour garantir une pression résiduelle déterminée minimum en amont (trois bar relatif par exemple) avant de permettre l'ouverture du clapet 11 de pression résiduelle sous l'action de la pression en aval (dans le réservoir).

La pièce 29 en forme de capuchon est par exemple vissées dans le corps 2 et délimite avec l'obturateur 11, la chambre 211 aval du mécanisme anti-retour.

La pièce 29 en forme de capuchon vient par exemple serrer (compresser) le filtre 15 de soutirage contre l'extrémité aval de la cartouche 261.

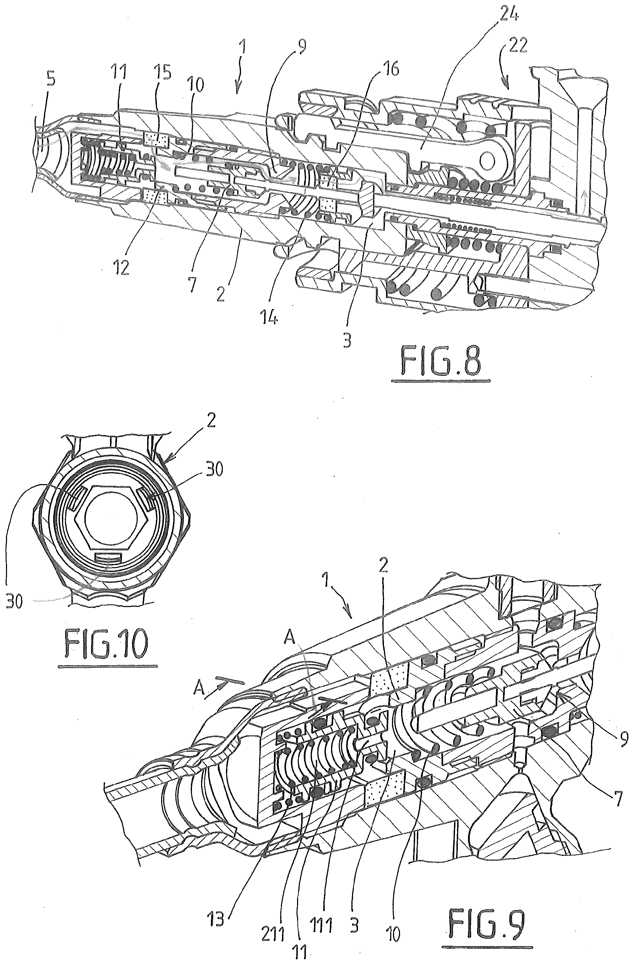

Comme visible aux figures 9 et 10, cette pièce 29 en forme de bouchon peut comporter ou délimiter des rainures 30 périphériques longitudinales au niveau de son pourtour externe pour canalisant le passage du gaz entre l'amont et l'aval. C'est-à-dire que le passage de gaz entre l'amont et l'aval du clapet 11 d'isolation est guidé par ces rainures 30 et contraint le gaz à traverser nécessairement le filtre 15 de soutirage. A noter que le filtre de soutirage peut être fixe (cf. figures 6 à 11) ou mobile (cf. figures 4 et 5)

Un tube 31 plongeur peut être serti à l'extrémité aval du corps 2. Ce tube 31 peut faire office de contre-écrou pour la pièce 29 formant capuchon du clapet 11 de pression résiduelle.

En position de fermeture du clapet 7 d'isolation (figures 1, 6 ; 2, 7), la pression en aval dans le réservoir 4 ouvre le clapet 11 de pression résiduelle (en surmontant le tarage du ressort de ce dernier). La cartouche 26, 261 peut comporter un passage transversal (non représenté aux figures) formant un passage pour le gaz sous pression situé en amont du siège 9 du clapet 7 d'isolement vers l'espace périphérique situé entre les deux joints 27 , 271 périphériques de la cartouche 26, 261 Cet espace sous pression peut être relié à au moins l'un parmi :
- un organe de mesure de la pression (par exemple un manomètre monté sur le corps 2) pour indiquer la pression dans le réservoir 4,
- une soupape de sécurité sensible à la pression pour évacuer le gaz vers l'extérieur en cas de pression excessive.

## Revendications

1. Robinet comprenant un corps (2) délimitant un circuit (3) interne de remplissage et de soutirage de fluide, ledit circuit (3) interne s'étendant entre une extrémité amont (6) destinée à être reliée avec un organe utilisateur soutirant ou distribuant du fluide sous pression via le circuit (3) interne et une extrémité aval (5) destinée à être mise en relation avec le volume de stockage d'un réservoir de fluide sous pression, le robinet (1) comprenant, disposés en série dans le circuit (3) interne : un clapet (7) d'isolement et un clapet (8) pare-poussière, le clapet (7) d'isolement étant mobile relativement à un siège (9) entre une position amont de fermeture du circuit (3) et au moins une position aval d'ouverture du circuit (3), ledit clapet (7) d'isolement étant sollicité vers sa position amont par un organe (10) de rappel, le clapet (8) pare-poussière comprenant une extrémité aval (108) et étant disposé en amont du clapet (7) d'isolement et étant mobile relativement au corps (2) entre une position amont de fermeture de l'extrémité amont du circuit (3) et au moins une position aval d'ouverture de l'extrémité amont du circuit (3), ledit clapet (8) pare-poussière étant sollicité vers sa position amont par un organe (14) de rappel, **caractérisé en ce que** le robinet (1) comprend en outre, dans le circuit (3) interne, un clapet (11) de pression résiduelle distinct du clapet (7) d'isolation, le clapet (11) de pression résiduelle étant disposé en série avec le clapet (7) d'isolation et en aval du clapet (7) d'isolation, et **en ce que** le clapet (8) pare-poussière est déplaçable de sa position amont de fermeture vers :
- une première position aval déterminée dite « sans contact » ouvrant l'extrémité amont du circuit (3), dans laquelle l'extrémité (108) aval du clapet (8) pare-poussière ne pousse pas le clapet (7) d'isolement, ou
- une seconde position aval déterminée dite « de contact » ouvrant l'extrémité amont (6) du circuit (3), dans laquelle l'extrémité (108) aval du clapet (8) pare-poussière vient pousser une extrémité amont du clapet (7) d'isolement mobile pour déplacer par contact le clapet (7) d'isolement hors de son siège (9) vers une première position aval d'ouverture du circuit (3) dans laquelle le clapet (7) d'isolement ne pousse pas le clapet (11) de pression résiduelle, ou
- une troisième position aval déterminée dite « de remplissage » ouvrant l'extrémité amont (6) du circuit (3), dans laquelle l'extrémité (108) aval du clapet (8) pare-poussière vient pousser une extrémité amont du clapet (7) d'isolement mobile pour déplacer par contact le clapet (7) d'isolement hors de son siège (9) vers une seconde position aval d'ouverture du circuit (3) dans laquelle le clapet (7) d'isolement pousse le clapet (11) de pression résiduelle dans une position d'ouverture de l'extrémité aval du circuit (3).

2. Robinet selon la revendication 1, **caractérisé en ce que** le clapet (11) de pression résiduelle comprend un mécanisme (111, 211) anti-retour («NRV») générant un effort sur le clapet (11) de pression résiduelle le sollicitant vers sa position de fermeture du circuit (3) lorsque ce dernier n'est pas actionné mécaniquement et est soumis à une pression fluidique déterminée au niveau de sa partie amont.

3. Robinet selon la revendication 2, **caractérisé en ce que** le mécanisme (111, 211) anti-retour (« NRV ») comprend un canal (111) reliant un extrémité amont du clapet (11) de pression résiduelle à une chambre (211) aval, pour transformer une pression fluidique sur la partie amont du clapet (11) de pression résiduelle en un effort sur l'extrémité aval du clapet (11) de pression résiduelle tendant à déplacer ledit clapet (11) de pression résiduelle dans sa position de fermeture du circuit (3).

4. Robinet selon la revendication 3, **caractérisé en ce que** le mécanisme (111, 211) anti-retour (« NRV ») comprend un rapport de surfaces déterminé entre d'une part l'extrémité amont du clapet (11) de pression résiduelle soumise à un fluide venant de l'amont dans le circuit (3) et, d'autre part, l'extrémité aval du clapet (11) de pression résiduelle, pour solliciter ledit clapet (11) de pression résiduelle en position de fermeture lorsque ces extrémité aval et amont sont soumises à un différentiel de pression déterminé.

5. Robinet selon l'une quelconque des revendications 2 à 4 **caractérisée en ce que** lorsque le clapet de pression résiduelle n'est pas déplacé mécaniquement dans une position d'ouverture du circuit (via le clapet d'isolement), le mécanisme anti-retour (111,211) («NRV») empêche le transit de fluide sous pression de l'amont vers l'aval en maintenant fermé le clapet de pression résiduelle via la pression du fluide circulant d'amont vers l'aval sur le clapet de pression résiduelle.

6. Robinet selon l'une quelconque des revendications 1 à 5 **caractérisé en ce que** le clapet pare- poussière porte un filtre interposé sur le trajet d'au moins une partie du fluide qui transite entre l'amont et l'aval du circuit, le filtre étant mobile avec le clapet pare-poussière.

7. Robinet selon l'une quelconque des revendications 1 à 6, **caractérisé en ce qu'**il comporte un filtre (15) aval disposé dans le circuit (3) interne et interposé en aval du clapet (11) de pression résiduelle et contraignant au moins une partie et de préférence tout le flux de fluide transitant dans le circuit (3) au travers de clapet (11) de pression résiduel ouvert à traverser le filtre (15).

8. Robinet selon l'une quelconque des revendications 1 à 7, **caractérisé en ce que** le clapet (11) de pression résiduelle est configuré pour refermer le circuit (3) tant que le différentiel de pression entre ses extrémités aval et amont n'excède pas une valeur déterminée comprise entre trois et six bar, c'est-à-dire que, à défaut d'être actionné mécaniquement vers sa position d'ouverture, le clapet (11) de pression résiduel n'ouvre le circuit que lorsque la pression de fluide exercée sur sa face aval excède la pression exercée sur sa face amont d'une valeur déterminée.

9. Récipient de fluide sous pression, en particulier bouteille ou ensemble de bouteilles de gaz sous pression, comprenant un robinet (1) conforme à l'une quelconque des revendications 1 à 8.

10. Récipient selon la revendication 9 **caractérisé en ce qu'**il comporte un organe ou module (22) de conditionnement de soutirage ou/et de remplissage raccordé à l'extrémité amont (6) du corps (2) du robinet (1).

11. Récipient selon la revendication 10 **caractérisé en ce que** l'organe de module (22) de conditionnement est raccordé de façon amovible à l'extrémité amont (6) du corps (2) du robinet (1).

12. Récipient selon la revendication 10 ou 11 **caractérisé en ce que** la surface extérieure du corps (2) comprend des empreintes formant des creux et/ou reliefs d'attache coopérant avec des formes conjuguées du module (22) de conditionnement formant un système d'attache mécanique à connexion rapide.

13. Récipient selon l'une quelconque des revendications 10 à 12 **caractérisé en ce que** l'organe ou module (22) de conditionnement comporte un organe (23) pousse-clapet mobile qui peut être déplacé par un organe d'actionnement tel qu'un levier pivotant.

14. Procédé de remplissage d'un récipient de fluide sous pression conforme à la revendication 9 au moyen d'une prise (22) de conditionnement connectée mécaniquement au corps (2) du robinet (1) de façon amovible, **caractérisé en ce qu'**il comporte une étape de déplacement du clapet (8) pare-poussière de l'amont vers l'aval dans une position aval déterminée dite « de remplissage » ouvrant l'extrémité amont (6) du circuit (3), dans laquelle l'extrémité (108) aval du clapet (8) pare-poussière vient pousser une extrémité amont du clapet (7) d'isolement mobile et déplace par contact le clapet (7) d'isolement hors de son siège (9) vers une position aval d'ouverture du circuit (3) et **en ce que** le clapet (11) de pression résiduelle est également déplacé dans une position d'ouverture de l'extrémité aval du circuit (3) pour autoriser le transfert de fluide d'amont vers l'aval dans le récipient (4).

15. Procédé de remplissage selon la revendication 14, **caractérisé en ce que** dans sa position aval déterminée dite « de remplissage » le clapet (7) d'isolement pousse le clapet (11) de pression résiduelle dans une position d'ouverture de l'extrémité aval du circuit (3) pour autoriser le transfert de fluide d'amont vers l'aval dans le récipient (4).

16. Procédé selon la revendication 14 ou 15, **caractérisé en ce que** le clapet (10) pare-poussière est déplacé vers l'aval par une action mécanique d'une extrémité d'un pousse-clapet (23) mobile appartenant à la prise (22) de conditionnement.

17. Procédé de soutirage de fluide sous pression d'un récipient de fluide sous pression conforme à la revendication 9 au moyen d'une prise (22) de conditionnement connectée mécaniquement au corps (2) du robinet (1) de façon amovible, **caractérisé en ce qu'**il comporte une première étape de déplacement du clapet (8) pare-poussière de l'amont vers l'aval dans une position aval déterminée dite « de contact » ouvrant l'extrémité amont (6) du circuit (3), dans laquelle l'extrémité (108) aval du clapet (8) pare-poussière vient pousser une extrémité amont du clapet (7) d'isolement mobile pour déplacer par contact le clapet (7) d'isolement hors de son siège (9) vers une première position aval d'ouverture du circuit (3) dans laquelle le clapet (7) d'isolement ne pousse pas le clapet (11) de pression résiduelle, pour permettre le soutirage de fluide dans le circuit de l'aval (5) vers l'amont (6) au travers du clapet (11) de pression résiduel ouvert par la pression aval dans le récipient (4).

18. Procédé de mise sous vide du robinet d'un récipient de fluide sous pression conforme à la revendication 9 au moyen d'une prise (22) de conditionnement connectée mécaniquement et de façon étanche au corps (2) du robinet (1), **caractérisé en ce qu'**il comporte une étape de déplacement du clapet (8) pare-poussière de l'amont vers l'aval dans une position aval déterminée dite « sans contact » ouvrant l'extrémité amont (6) du circuit (3) mais dans laquelle l'extrémité (108) aval du clapet (8) pare-poussière ne vient pas pousser une extrémité amont du clapet (7) d'isolement mobile qui reste en position de fermeture, et une étape de génération d'une pression inférieure à la pression atmosphérique dans la partie amont du circuit (3) de soutirage, c'est-à-dire en amont du clapet (7) d'isolation.

## Patentansprüche

1. Schließhahn, umfassend einen Körper (2), der einen internen Kreis (3) zum Füllen und Entnehmen von Fluid begrenzt, wobei sich der interne Kreis (3) zwischen einem stromaufwärtigen Ende (6), das dazu bestimmt ist, mit einem Benutzerorgan verbunden zu werden, das Druckfluid über den internen Kreis (3) entnimmt oder ausgibt, und einem stromabwärtigen Ende (5), das dazu bestimmt ist, mit dem Speichervolumen eines Druckfluidbehälters in Verbindung gebracht zu werden, erstreckt, wobei der Schließhahn (1) Folgendes in dem internen Kreis (3) in Reihe angeordnet umfasst: ein Absperrventil (7) und eine Staubschutzklappe (8), wobei das Absperrventil (7) relativ zu einem Sitz (9) zwischen einer stromaufwärtigen Schließstellung des Kreises (3) und mindestens einer stromabwärtigen Öffnungsstellung des Kreises (3) beweglich ist, wobei das Absperrventil (7) durch ein Rückstellorgan (10) in Richtung seiner stromaufwärtigen Stellung beaufschlagt wird, die Staubschutzklappe (8), die ein stromabwärtiges Ende (108) umfasst und stromaufwärts des Absperrventils (7) angeordnet ist und relativ zu dem Körper (2) zwischen einer stromaufwärtigen Schließstellung des stromaufwärtigen Endes des Kreisaufs (3) und mindestens einer stromabwärtigen Öffnungsstellung des stromaufwärtigen Endes des Kreises (3) beweglich ist, wobei die Staubschutzklappe (8) durch ein Rückstellorgan (14) in ihre stromaufwärtige Stellung beaufschlagt wird, **dadurch gekennzeichnet, dass** der Schließhahn (1) weiter im internen Kreis (3) ein von dem Absperrventil (7) getrenntes Restdruckventil (11) umfasst, wobei das Restdruckventil (11) in Reihe mit dem Absperrventil (7) und stromabwärts des Absperrventils (7) angeordnet ist, und dadurch, dass die Staubschutzklappe (8) von ihrer stromaufwärtigen Schließstellung verschiebbar ist in:
- eine erste festgelegte stromabwärtige Stellung, die als "kontaktlose Stellung" bezeichnet wird und das stromaufwärtige Ende des Kreises (3) öffnet, wobei das stromabwärtige Ende (108) der Staubschutzklappe (8) das Absperrventil (7) nicht drückt, oder
- eine zweite festgelegte stromabwärtige Stellung, die als "Kontaktstellung" bezeichnet wird, die das stromaufwärtige Ende (6) des Kreises (3) öffnet, wobei das stromabwärtige Ende (108) der Staubschutzklappe (8) ein stromaufwärtiges Ende des beweglichen Absperrventils (7) drückt, um das Absperrventil (7) durch Kontakt zu einer ersten stromabwärtigen Öffnungsstellung des Kreises (3), in der das Absperrventil (7) das Restdruckventil (11) nicht drückt, aus seinem Sitz (9) zu bewegen, oder
- eine dritte festgelegte stromabwärtige Stellung, die als "Füllstellung" bezeichnet wird, die das stromaufwärtige Ende (6) des Kreises (3) öffnet, wobei das stromabwärtige Ende (108) der Staubschutzklappe (8) ein stromaufwärtiges Ende des beweglichen Absperrventils (7) drückt, um das Absperrventil (7) durch Kontakt zu einer zweiten stromabwärtigen Öffnungsstellung des Kreises (3), in der das Absperrventil (7) das Restdruckventil (11) in eine Öffnungsstellung des stromabwärtigen Endes des Kreises (3) drückt, aus seinem Sitz (9) zu bewegen.

2. Schließhahn nach Anspruch 1, **dadurch gekennzeichnet, dass** das Restdruckventil (11) einen Rückschlagmechanismus ("NRV") (111, 211) umfasst, der eine Kraft auf das Restdruckventil (11) ausübt, um es bis in seine Schließstellung des Kreises (3) zu beaufschlagen, wenn letzterer nicht mechanisch betätigt wird und an seinem stromaufwärtigen Abschnitt einem festgelegten Fluiddruck ausgesetzt wird.

3. Schließhahn nach Anspruch 2, **dadurch gekennzeichnet, dass** der Rückschlagmechanismus ("NRV") (111, 211) einen Kanal (111) umfasst, der ein stromaufwärtiges Ende des Restdruckventils (11) mit einer stromabwärtigen Kammer (211) verbindet, um einen Fluiddruck auf den stromaufwärtigen Abschnitt des Restdruckventils (11) in eine Kraft auf das stromabwärtige Ende des Restdruckventils (11) umzuwandeln, die dazu tendiert, das Restdruckventil (11) in seine Schließstellung des Kreises (3) zu bewegen.

4. Schließhahn nach Anspruch 3, **dadurch gekennzeichnet, dass** der Rückschlagmechanismus ("NRV") (111, 211) ein bestimmtes Oberflächenverhältnis zwischen einerseits dem stromaufwärtigen Ende des Restdruckventils (11), das einem Fluid aus dem stromaufwärtigen Kreis (3) ausgesetzt ist, und andererseits dem stromabwärtigen Ende des Restdruckventils (11), umfasst, um das Restdruckventil (11) in der Schließstellung zu beaufschlagen, wenn diese stromabwärtigen und stromaufwärtigen Enden einer bestimmten Druckdifferenz ausgesetzt sind.

5. Schließhahn nach einem der Ansprüche 2 bis 4, **dadurch gekennzeichnet, dass**, wenn das Restdruckventil nicht mechanisch in eine Öffnungsstellung des Kreises (über das Absperrventil) bewegt wird, der Rückschlagmechanismus ("NRV") (111, 211) den Durchgang von Druckfluid von stromaufwärts nach stromabwärts verhindert, indem das Restdruckventil über den Druck des stromaufwärts nach stromabwärts strömenden Fluids auf dem Restdruckventil geschlossen gehalten wird.

6. Schließhahn nach einem der Ansprüche 1 bis 5, **dadurch gekennzeichnet, dass** die Staubschutzklappe einen Filter trägt, der auf dem Weg mindestens eines Teils des Fluids angeordnet ist, der zwischen dem Bereich stromaufwärts und stromabwärts des Kreises durchgeht, wobei der Filter mit der Staubschutzklappe beweglich ist.

7. Schließhahn nach einem der Ansprüche 1 bis 6, **dadurch gekennzeichnet, dass** er einen im internen Kreis (3) angeordneten und stromabwärts des Restdruckventils (11) zwischengeordneten Filter (15) umfasst, der mindestens einen Teil und vorzugsweise den gesamten Fluidstrom, der durch in dem Kreis (3) durch ein offenes Restdruckventil (11) zum Durchströmen des Filters (15) durchgeht, einschränkt.

8. Schließhahn nach einem der Ansprüche 1 bis 7, **dadurch gekennzeichnet, dass** das Restdruckventil (11) konfiguriert ist, um den Kreis (3) zu schließen, solange die Druckdifferenz zwischen seinem stromabwärtigen und stromaufwärtigen Ende einen festgelegten Wert zwischen drei und sechs bar nicht überschreitet, d. h. mangels mechanischer Betätigung in seine Öffnungsstellung öffnet das Restdruckventil (11) den Kreis erst dann, wenn der auf seiner stromabwärtigen Seite ausgeübte Fluiddruck den auf seiner stromaufwärtigen Seite ausgeübten Druck um einen festgelegten Wert übersteigt.

9. Druckfluidbehälter, insbesondere Druckgasflasche oder Druckgasflaschenanordnung, umfassend einen Schließhahn (1) nach einem der Ansprüche 1 bis 8.

10. Behälter nach Anspruch 9, **dadurch gekennzeichnet, dass** er ein Konditionierungsorgan oder -modul (22) zum Entnehmen und/oder Füllen beinhaltet, das an das stromaufwärtige Ende (6) des Körpers (2) des Schließhahns (1) angeschlossen ist.

11. Behälter nach Anspruch 10, **dadurch gekennzeichnet, dass** das Organ (22) des Konditionierungsmoduls lösbar an das stromaufwärtige Ende (6) des Körpers (2) des Schließhahns (1) angeschlossen ist.

12. Behälter nach Anspruch 10 oder 11, **dadurch gekennzeichnet, dass** die Außenfläche des Körpers (2) Vertiefungen umfasst, die Hohlräume und/oder Erhebungen zur Befestigung bilden, die mit konjugierten Formen des Konditionierungsmoduls (22) zusammenwirken und ein mechanisches Befestigungssystem mit Schnellverbindung bilden.

13. Behälter nach einem der Ansprüche 10 bis 12, **dadurch gekennzeichnet, dass** das Konditionierungsorgan oder -modul (22) ein bewegliches Ventilsstellerorgan (23) beinhaltet, das durch ein Betätigungsorgan, wie beispielsweise einen Schwenkhebel, bewegt werden kann.

14. Verfahren zum Füllen eines Druckfluidbehälters nach Anspruch 9 mittels eines Konditionierungsanschlusses (22), der lösbar mechanisch mit dem Körper (2) des Schließhahns (1) verbunden ist, **dadurch gekennzeichnet, dass** es einen Schritt zum Bewegen der Staubschutzklappe (8) von stromaufwärts nach stromabwärts in eine festgelegte stromabwärtige Stellung, genannt "Füllstellung", beinhaltet, die das stromaufwärtige Ende (6) des Kreises (3) öffnet, wobei das stromabwärtige Ende (108) der Staubschutzklappe (8) ein stromaufwärtiges Ende des beweglichen Absperrventils (7) drückt und das Absperrventil (7) durch Kontakt zu einer stromabwärtigen Öffnungsstellung des Kreises (3) aus seinem Sitz (9) bewegt, und dadurch, dass das Restdruckventil (11) auch in eine Öffnungsstellung des stromabwärtigen Endes des Kreises (3) bewegt wird, um den Fluidtransfer von stromaufwärts nach stromabwärts in dem Behälter (4) zu erlauben.

15. Verfahren zum Füllen nach Anspruch 14, **dadurch gekennzeichnet, dass** das Absperrventil (7) in seiner festgelegten stromabwärtigen Stellung, die als "Füllstellung" bezeichnet wird, das Restdruckventil (11) in eine Öffnungsstellung des stromabwärtigen Endes des Kreises (3) drückt, um den Fluidtransfer von stromaufwärts nach stromabwärts in dem Behälter (4) zu erlauben.

16. Verfahren nach Anspruch 14 oder 15, **dadurch gekennzeichnet, dass** die Staubschutzklappe (10) durch eine mechanische Betätigung eines Endes eines zum Konditionierungsanschluss (22) gehörenden beweglichen Ventilstellers (23) stromabwärts bewegt wird.

17. Verfahren zum Entnehmen von Druckfluid aus einem Druckfluidbehälter nach Anspruch 9 mittels eines Konditionierungsanschlusses (22), der lösbar mechanisch mit dem Körper (2) des Schließhahns (1) verbunden ist, **dadurch gekennzeichnet, dass** es einen ersten Schritt zum Bewegen der Staubschutzklappe (8) von stromaufwärts nach stromabwärts in eine festgelegte stromabwärtige Stellung, die als "Kontaktstellung" bezeichnet wird, beinhaltet, die das stromaufwärtige Ende (6) des Kreises (3) öffnet, wobei das stromabwärtige Ende (108) der Staubschutzklappe (8) ein stromaufwärtiges Ende des beweglichen Absperrventils (7) drückt, um das Absperrventil (7) durch Kontakt zu einer ersten stromabwärtigen Öffnungsstellung des Kreises (3) aus seinem Sitz (9) zu bewegen, in der das Absperrventil (7) das Restdruckventil (11) nicht drückt, um zu ermöglichen, dass das Fluid im Kreis von stromabwärts (5) nach stromaufwärts (6) durch das Restdruckventil (11) entnommen wird, das durch den stromabwärtigen Druck im Behälter (4) geöffnet wird.

18. Verfahren zum Leeren des Schließhahns eines Druckfluidbehälters nach Anspruch 9 mittels eines Konditionierungsanschlusses (22), der mechanisch und dicht mit dem Körper (2) des Schließhahns (1) verbunden ist, **dadurch gekennzeichnet, dass** es einen Schritt zum Bewegen der Staubschutzklappe (8) von stromaufwärts nach stromabwärts in eine festgelegte stromabwärtige Stellung, die als "kontaktlose Stellung" bezeichnet wird, beinhaltet und das stromaufwärtige Ende (6) des Kreises (3) öffnet, wobei jedoch das stromabwärtige Ende (108) der Staubschutzklappe (8) kein stromaufwärtiges Ende des beweglichen Absperrventils (7) drückt, das in der Schließstellung verbleibt, und einen Schritt zum Erzeugen eines Drucks, der niedriger ist als der Atmosphärendruck im stromaufwärtigen Abschnitt des Entnahmekreises (3), das heißt stromaufwärts des Absperrventils (7).

## Claims

1. Tap comprising a body (2) delimiting an internal circuit (3) for the filling and drawing off of a fluid, said internal circuit (3) extending between an upstream end (6) configured to be connected with a user member for drawing off or dispensing a pressurised fluid through the internal circuit (3) and a downstream end (5) configured to be connected to the storage volume of a pressurised fluid tank, the tap (1) comprising, arranged in a series in the internal circuit (3): an isolation valve (7) and a dustscreen valve (8), the isolation valve (7) being movable with respect to a seat (9) between an upstream position of closure of the circuit (3) and at least one downstream position of opening of the circuit (3), said isolation valve (7) being urged towards its upstream position by a return member (10), the dustscreen valve (8) comprising a downstream end (108) and being arranged upstream from the isolation valve (7) and being movable with respect to the body (2) between an upstream position of closure of the upstream end of the circuit (3) and at least one downstream position of opening of the downstream end of the circuit (3), said dustscreen valve (8) being urged towards its upstream position by a return member (14), **characterised in that** the tap (1) further comprises, in the internal circuit (3), a residual-pressure valve (11) separate from the isolation valve (7), the residual-pressure valve (11) being arranged in a series with the isolation valve (7) and downstream from the isolation valve (7), and **in that** the dustscreen valve (8) is movable from its upstream closed position to:
- a first determined downstream so-called "no contact" position opening the upstream end of the circuit (3), in which the downstream end (108) of the dustscreen valve (8) does not push the isolation valve (7), or
- a second determined downstream so-called "contact" position opening the upstream end (6) of the circuit (3), in which the downstream end (108) of the dustscreen valve (8) pushes an upstream end of the movable isolation valve (7) to move by contact the isolation valve (7) out of its seat (9) to a first downstream position of opening of the circuit (3) in which the isolation valve (7) does not push the residual-pressure valve (11), or
- a third determined downstream so-called "filling" position opening the upstream end (6) of the circuit (3), in which the downstream end (108) of the dustscreen valve (8) pushes an upstream end of the movable isolation valve (7) to move by contact the isolation valve (7) out of its seat (9) to a second downstream position of opening of the circuit (3) in which the isolation valve (7) pushes the residual-pressure valve (11) to a position of opening of the downstream end of the circuit (3).

2. Tap according to claim 1, **characterised in that** the residual-pressure valve (11) comprises a non-return mechanism (111, 211) ("NRV") generating a force on the residual-pressure valve (11) urging it towards its position of closing of the circuit (3) when the circuit is not mechanically actuated and is subjected to a determined fluid pressure at its upstream end.

3. Tap according to claim 2, **characterised in that** the non-return mechanism (111, 211) ("NRV") comprises a channel (111) connecting an upstream end of the residual-pressure valve (11) to a downstream chamber (211), to transform a fluid pressure on the upstream portion of the residual-pressure valve (11) into a force on the downstream end of the residual-pressure valve (11) to move said residual-pressure valve (11) to its position of closure of the circuit (3).

4. Tap according to claim 3, **characterised in that** the non-return mechanism (111, 211) ("NRV") comprises a determined surface ratio between, on one hand, the upstream end of the residual-pressure valve (11) subjected to a fluid coming from the upstream portion in the circuit (3) and, on the other hand, the downstream end of the residual-pressure valve (11), to urge said residual-pressure valve (11) into a closed position when these downstream and upstream ends are subject to a determined pressure difference.

5. Tap according to any of claims 2 to 4, **characterised in that**, when the residual-pressure valve is not mechanically moved to a position of opening of the circuit (through the isolation valve), the non-return mechanism (111, 211) ("NRV") prevents pressurised fluid from travelling from the upstream portion to the downstream portion by maintaining the residual-pressure valve closed by the pressure of the fluid circulating from the upstream portion to the downstream portion on the residual-pressure valve.

6. Tap according to any of claims 1 to 5, **characterised in that** the dustscreen valve includes a filter interposed on the path of at least a part of the fluid travelling between the upstream portion and the downstream portion of the circuit, the filter being movable with the dustscreen valve.

7. Tap according to any of claims 1 to 6, **characterised in that** it comprises a downstream filter (15) arranged in the internal circuit (3) and interposed downstream from the residual-pressure valve (11) and forcing at least a part and preferably all the flow of the fluid travelling in the circuit (3) through the open residual-pressure valve (11) to pass through the filter (15).

8. Tap according to any of claims 1 to 7, **characterised in that** the residual-pressure valve (11) is configured to close the circuit (3) as long as the pressure difference between its downstream and upstream ends does not exceed a determined value ranging from three to six bar, that is to say, unless it is mechanically actuated to its open position, the residual-pressure valve (11) opens the circuit only when the fluid pressure exerted on the downstream face exceeds the pressure exerted on the upstream face by a determined value.

9. Pressurised fluid container, in particular a cylinder or set of cylinders of pressurised gas, comprising a tap (1) according to any of claims 1 to 8.

10. Container according to claim 9, **characterised in that** it comprises a filling member or module (22) for drawing off and/or filling connected to the upstream end (6) of the body (2) of the tap (1).

11. Container according to claim 10, **characterised in that** the member of the filling module (22) is connected in a removable manner to the upstream end (6) of the body (2) of the tap (1).

12. Container according to claim 10 or 11, **characterised in that** the outer surface of the body (2) comprises imprints forming fastening cavities and/or protrusions cooperating with the corresponding shapes of the filling module (22) forming a quick-connection mechanical fastening system.

13. Container according to any of claims 10 to 12, **characterised in that** the filling member or module (22) comprises a movable valve-actuator member (23) that can be moved by an actuation member such as a pivoting lever.

14. Method for filling a container of pressurised fluid according to claim 9 by means of a filling outlet (22) mechanically connected to the body (2) of the tap (1) in a removable manner, **characterised in that** it comprises a step of moving the dustscreen valve (8) from upstream to downstream to a determined so-called "filling" downstream position opening the upstream end (6) of the circuit (3), in which the downstream end (108) of the dustscreen valve (8) pushes an upstream end of the movable isolation valve (7) and moves by contact the isolation valve (7) out of its seat (9) to a downstream position of opening of the circuit (3), and **in that** the residual-pressure valve (11) is also moved to a position of opening of the downstream end of the circuit (3) to allow the upstream to downstream transfer of fluid in the container (4).

15. Filling method according to claim 14, **characterised in that**, in the determined downstream so-called "filling" position, the isolation valve (7) pushes the residual-pressure valve (11) to a position of opening of the downstream end of the circuit (3) to allow the transfer of fluid from upstream to downstream in the container (4).

16. Method according to claim 14 or 15, **characterised in that** the dustscreen valve (10) is moved downstream by a mechanical action of an end of a movable valve actuator (23) belonging to the filling outlet (22).

17. Method for the drawing off of a pressurised fluid for a pressurised fluid container according to claim 9 by means of a filling outlet (22) mechanically connected to the body (2) of the tap (1) in a removable manner, **characterised in that** it comprises a first step whereby the dustscreen valve (8) is moved from upstream to downstream to a determined so-called "contact" downstream position opening the upstream end (6) of the circuit (3), in which the downstream end (108) of the dustscreen valve (8) pushes an upstream end of the movable isolation valve (7) to move by contact the isolation valve (7) out of its seat (9) to a first downstream position of opening of the circuit (3) in which the isolation valve (7) does not push the residual-pressure valve (11), to allow the drawing off of the fluid in the circuit from downstream (5) to upstream (6) through the residual-pressure valve (11) opened by the downstream pressure in the container (4).

18. Method to create a vacuum in the tap of a pressurised fluid container according to claim 9 by means of a filling outlet (22) mechanically connected in a sealed manner to the body (2) of the tap (1), **characterised in that** it comprises a step whereby the dustscreen valve (8) is moved upstream to downstream in a determined downstream so-called "no contact" position opening the upstream end (6) of the circuit (3), but in which the downstream end (108) of the dustscreen valve (8) does not push an upstream end of the movable isolation valve (7) that remains in a closed position, and a step whereby a pressure of less than the atmospheric pressure is generated in the upstream portion of the drawing-off circuit (3), i.e. upstream from the isolation valve (7).
